# FASCICULE DE BREVET EUROPEEN

(11) **EP 2 917 380 B1**
(45) Date de publication et mention de la délivrance du brevet: **03.05.2017**
(21) Numéro de dépôt: 13801604.3
(22) Date de dépôt: 07.11.2013
(51) Int. Cl.: C22C 21/00, C22F 1/04

(54) **PROCEDE DE FABRICATION D'UN ELEMENT DE STRUCTURE D'EPAISSEUR VARIABLE POUR CONSTRUCTION AERONAUTIQUE**
VERFAHREN ZUR HERSTELLUNG EINES STRUKTURELEMENTS MIT EINER VARIABLEN DICKE ZUR FLUGZEUGPRODUKTION
METHOD FOR MANUFACTURING A STRUCTURAL ELEMENT HAVING A VARIABLE THICKNESS FOR AIRCRAFT PRODUCTION

(30) Priorité: 08.11.2012 FR 1203006; 12.11.2012 US 201261725250 P
(43) Date de publication de la demande: 16.09.2015
(73) Titulaire: Constellium Issoire, 63500 Issoire (FR)
(72) Inventeur: EHRSTROM, Jean-Christophe, F-38000 GRENOBLE (FR); DANIELOU, Armelle, 73360 Les Echelles (FR); WARNER, Timothy, F-38700Corenc (FR)
(74) Mandataire: Constellium - Propriété Industrielle
(86) Numéro de dépôt international: PCT/FR2013/000287
(87) Numéro de publication internationale: WO 2014/072593

(56) Documents cités:
- EP-A1- 1 595 608
- US-A1- 2007 246 137

## Description

### Domaine technique de l'invention

La présente invention concerne les produits laminés et les éléments de structure, notamment pour construction aéronautique, en alliage d'aluminium.

### Etat de la technique

Alors que la concurrence entre les matériaux pour construction aéronautique s'intensifie, les critères commerciaux dans le choix des solutions s'avèrent parfois décisifs. Le constructeur s'intéresse principalement au prix du kilogramme de matériaux en vol qui correspond au produit du prix au kilogramme par le rapport " buy to fly ". Le rapport " buy to fly " est le rapport entre la matière première achetée par le constructeur d'avion et la matière première montée dans la structure volante. L'usinage intégral des pièces en aluminium à partir de tôles conduit à un rapport « buy to fly » parfois significatif, notamment pour des pièces telles que des panneaux de voilure pour lesquelles l'épaisseur nécessaire est plus élevée dans la région de l'emplanture de l'aile que dans celle de l'extrémité de l'aile. Une tôle est un produit laminé de section transversale rectangulaire dont l'épaisseur est uniforme. Pour la fabrication d'éléments de structure aéronautiques les tôles sont couramment utilisées quelle que soit la géométrie finale de la pièce réalisée. La modification de la géométrie de la tôle, même si elle se justifie pour réaliser des économies de matière, n'a cependant pas été adoptée à ce jour par les constructeurs aéronautiques car elle présente des inconvénients en terme de fabrication, de contrôle et de manutention et car elle ne permet pas un transfert rapide direct vers les procédés existants.

Par ailleurs, il est avantageux de réaliser des éléments structuraux monolithiques métalliques à propriétés variables dans l'espace de façon à obtenir dans chaque zone un compromis optimal de propriétés.

FR 2 707 092 décrit un procédé de fabrication de produits à durcissement structural possédant des propriétés variables de façon continue dans au moins une direction dans lequel le revenu est effectué en portant une des extrémités du produit à une température T et l'autre extrémité à une température t dans un four spécifique comprenant une chambre chaude et une chambre froide reliées par une pompe à chaleur.

WO 2005/098072 décrit un procédé de fabrication dans lequel au moins une étape du traitement de revenu est effectuée dans un four à profil thermique contrôlé comportant au moins deux zones ou groupes de zones Z₁ et Z₂ avec des températures initiales T₁ et T₂ dans lequel la longueur des deux zones est d'au moins un mètre.

WO2007/122314 concerne un procédé de fabrication d'un produit corroyé ou d'un élément de structure multi-fonctionnel monolithique en alliage d'aluminium comprenant une étape de transformation à chaud caractérisé en ce que postérieurement à la transformation à chaud il comprend également au moins une étape de transformation par déformation plastique à froid dans laquelle on impose en au moins deux zones de l'élément de structure des déformations plastiques généralisées moyennes différentes d'au moins 2% et préférentiellement différentes d'au moins 3%. Cependant les procédés décrits dans cette demande ne sont pas mis en oeuvre à l'échelle industrielle.

Par ailleurs, US 2005/0279433 décrit une méthode de laminage de tôle de façon à obtenir une épaisseur variable dans la longueur, particulièrement adaptée aux tôles en aluminium ou magnésium.

Le problème auquel répond la présente invention est de développer un procédé pour la fabrication de produits laminés et d'éléments de structure monolithiques en alliage d'aluminium, notamment pour la construction aéronautique, présentant un rapport « buy to fly » amélioré et présentant des compromis de propriétés optimisés dans chaque partie.

### Objet de l'invention

Un premier objet de l'invention est un procédé de fabrication d'un produit laminé d'épaisseur variable en alliage d'aluminium à traitement thermique dans lequel
a. on coule une plaque en alliage d'aluminium à traitement thermique,
b. optionnellement on homogénéise ladite plaque,
c. on lamine à chaud ladite plaque optionnellement homogénéisée, en réalisant dans le sens de la longueur une variation d'épaisseur pour obtenir un produit laminé d'épaisseur variable, présentant une partie la plus épaisse et une partie la plus mince dont la différence d'épaisseur est au moins 10%,
d. on met en solution et on trempe ledit produit laminé d'épaisseur variable,
e. on détensionne par traction contrôlée ledit produit laminé d'épaisseur variable ainsi mis en solution et trempé, avec une déformation permanente d'au moins 1 % dans la partie la plus épaisse,
f. on fait vieillir naturellement ou artificiellement le produit laminé ainsi obtenu.

Un autre objet de l'invention est un produit laminé d'épaisseur variable obtenu par le procédé selon l'invention présentant une partie la plus épaisse et une partie la plus mince dont l'épaisseur est différente d'au moins 10% et présentant à mi-épaisseur les propriétés suivantes : une limite d'élasticité R_{p0,2}(L) en traction dans la partie la plus mince supérieure d'au moins 5% à celle dans la partie la plus épaisse et une ténacité K_{1C} L-T dans la partie la plus épaisse supérieure d'au moins 15% à celle dans la partie la plus mince.

Encore un autre objet de l'invention est l'utilisation d'un produit laminé d'épaisseur variable obtenu par le procédé selon l'invention comme élément de structure monolithique pour avion et de préférence comme peau de voilure intrados ou extrados.

### Description des figures

Figure 1 : Différents exemples de géométrie de produit laminés d'épaisseur variable obtenus par le procédé selon l'invention.
Figure 2 : Déformation permanente lors du détensionnement par traction contrôlée en fonction de la position dans la longueur pour le produit laminé d'épaisseur variable de l'exemple.

### Description de l'invention

Sauf mention contraire, toutes les indications relatives à la composition chimique des alliages sont exprimées en pourcent massique. La désignation des alliages suit les règles de The Aluminum Association, connues de l'homme du métier. Les états métallurgiques et les traitements thermiques sont définis dans la norme européenne EN 515. La composition chimique d'alliages d'aluminium normalisés est définie par exemple dans la norme EN 573-3. Les caractéristiques mécaniques statiques en traction, en d'autres termes la résistance à la rupture Rₘ, la limite d'élasticité conventionnelle à 0,2% d'allongement R_{p0,2}, et l'allongement à la rupture A%, sont déterminés par un essai de traction selon la norme NF EN ISO 6892-1, le prélèvement et le sens de l'essai étant définis par la norme EN 485-1. La limite d'élasticité en compression est mesurée à 0,2% de déformation plastique en compression selon la norme ASTM E9. La mesure de ténacité sous déformation plane K_{1C} est effectuée selon la norme ASTM E399. Dans le cas où des K_{1C} non valides au sens de cette norme sont obtenus, la valeur de K_{1C} indiquée est le K_{Q} mesuré avec l'éprouvette CT la plus épaisse qu'on peut prélever dans le produit laminé, et un rapport largeur sur épaisseur de l'éprouvette de 2.
Sauf mention contraire, les définitions de la norme européenne EN 12258-1 s'appliquent : en particulier on appelle alliage sans traitement thermique un alliage qui ne peut être durci de façon substantielle par un traitement thermique et alliage à traitement thermique un alliage qui peut être durci par un traitement thermique approprié.
Le terme « élément de structure » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Il s'agit typiquement d'une pièce mécanique dont la défaillance est susceptible de mettre en danger la sécurité de ladite construction, de ses utilisateurs, de ses usagers ou d'autrui. Dans le cadre de la présente invention un élément de structure est typiquement une pièce montée dans une structure volante. Pour un avion, ces éléments de structure comprennent notamment les éléments qui composent le fuselage, tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure intrados (lower wing skin) la peau de voilure extrados (upper wing skin), les raidisseurs (stringers ou stiffeners), les nervures (ribs) et longerons (spars) et l'empennage composé notamment de stabilisateurs horizontaux et verticaux (horizontal or vertical stabilisers), ainsi que les profilés de plancher (floor beams), les rails de sièges (seat tracks) et les portes.
Le terme « élément de structure monolithique » se réfère dans le cadre de la présente invention à un élément de structure qui a été obtenu à partir d'une seule pièce de demi-produit laminé, sans assemblage, tel que rivetage, soudage, collage, avec une autre pièce.

Selon l'invention, on obtient un produit laminé d'épaisseur variable en alliage d'aluminium à traitement thermique par un procédé dans lequel
a. on coule une plaque en alliage d'aluminium à traitement thermique,
b. optionnellement on homogénéise ladite plaque,
c. on lamine à chaud ladite plaque optionnellement homogénéisée, en réalisant dans le sens de la longueur une variation d'épaisseur pour obtenir un produit laminé d'épaisseur variable, présentant une partie la plus épaisse et une partie la plus mince dont la différence d'épaisseur est d'au moins 10%,
d. on met en solution et on trempe ledit produit laminé d'épaisseur variable,
e. on détensionne par traction contrôlée ledit produit laminé d'épaisseur variable ainsi mis en solution et trempé, avec une déformation permanente d'au moins 1 % dans la partie la plus épaisse,
f. on fait vieillir naturellement ou artificiellement le produit laminé ainsi obtenu.

Le procédé selon l'invention est notamment avantageux pour les alliages de la famille 2XXX dont les propriétés de traction et de compression après vieillissement sont augmentées par la déformation entre trempe et vieillissement. Le procédé est plus particulièrement avantageux pour les alliages de la série 2XXX contenant au moins 0,5 % en poids de lithium dans un état métallurgique T8 ou T8X car les propriétés de traction après vieillissement sont particulièrement augmentées par la déformation entre trempe et revenu pour ce type d'alliage.

L'homogénéisation de la plaque de laminage est notamment avantageuse pour éviter les casses lors du laminage, pour faciliter la mise en solution et pour mieux contrôler la structure granulaire.

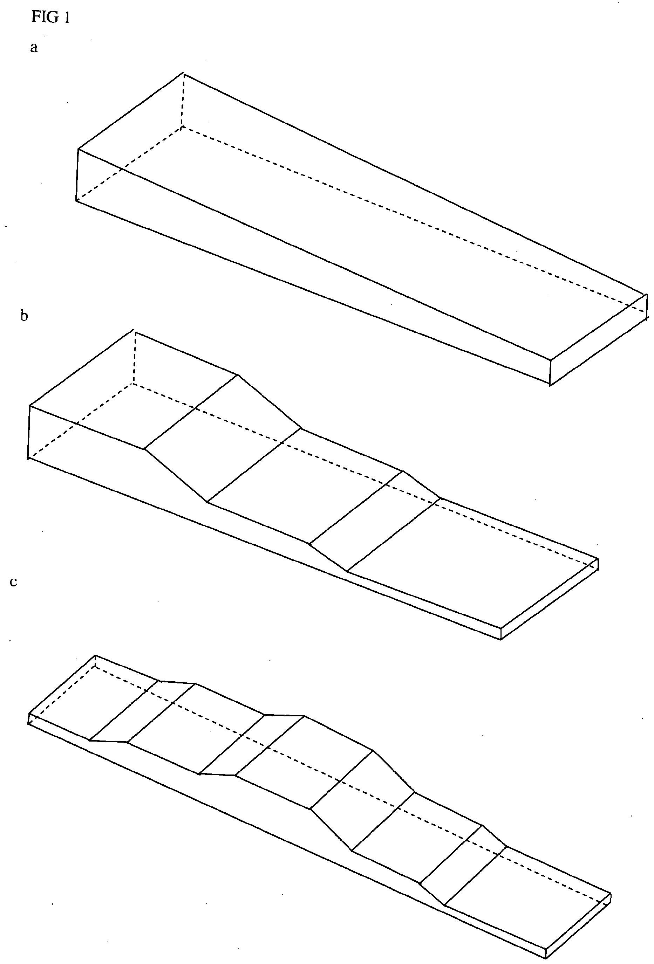

Le laminage à chaud jusqu'à une épaisseur variable est réalisé de façon à obtenir dans le sens de la longueur une différence d'épaisseur d'au moins 10% entre la partie la plus épaisse et la partie la plus mince. La variation d'épaisseur est obtenue soit de manière progressive sur une grande longueur pouvant atteindre la longueur du produit laminé lui-même, soit par au moins une variation relativement locale permettant toutefois d'éviter les casses à la traction à cause de la concentration de contrainte, par exemple sur une longueur de 0,5 m. On désigne par partie la plus épaisse ou partie la plus mince les portions continues du produit laminé d'une longueur d'au moins un mètre dont l'épaisseur moyenne est la plus élevée ou la plus faible, respectivement. La différence d'épaisseur exprimée en pourcentage est égale à la différence entre l'épaisseur de la partie la plus épaisse et celle de la partie la plus mince divisée par l'épaisseur de la partie la plus mince, l'épaisseur de la partie la plus épaisse étant l'épaisseur moyenne de la partie la plus épaisse et l'épaisseur de la partie la plus mince étant l'épaisseur moyenne de la partie la plus mince. Avantageusement la dite différence d'épaisseur est d'au moins 20 %. Dans un mode de réalisation de l'invention la dite différence d'épaisseur est d'au moins 30%. Typiquement la différence d'épaisseur entre la partie la plus épaisse et la partie la plus mince est d'environ 2 mm ou 4 mm ou plus selon l'épaisseur. De préférence, l'épaisseur est homogène dans le sens de la largeur. La variation d'épaisseur peut être continue sur l'ensemble du produit laminé, tel qu'illustré par la figure la ou présenter des parties d'épaisseur constante reliées entre elles par des parties d'épaisseur variable ayant une longueur d'environ un mètre ou plus, tel qu'illustré par la figure 1b. Dans un mode de réalisation de l'invention illustré par la figure 1c le produit laminé d'épaisseur variable présente à ses deux extrémités une épaisseur identique, la partie la plus épaisse ou la moins épaisse étant typiquement localisée à mi-longueur. Dans ce mode de réalisation le produit laminé est coupé en deux à mi-longueur avant usinage pour obtention d'un élément de structure. Ce mode est avantageux car lors de la traction, les parties situées dans les mors sont d'épaisseur identique.

L'épaisseur dudit produit laminé est avantageusement comprise entre 10 et 50 mm et de préférence entre 12 et 30 mm. Dans un mode de réalisation de l'invention, la partie la plus épaisse a une épaisseur comprise entre 20 et 30 mm, et la partie la plus mince a une épaisseur comprise entre 10 et 20 mm.

Avantageusement la longueur dudit produit laminé est comprise entre 5 et 40 m et de préférence entre 10 et 30 m.

La mise en solution du produit laminé d'épaisseur variable a une durée et une température suffisantes pour que la mise en solution soit satisfaisante dans la partie la plus épaisse du produit. Ainsi la mise en solution est également assurée dans la partie la plus mince.

De même la trempe est dimensionnée pour la partie la plus épaisse du produit.

Après la trempe, on réalise le détensionnement des contraintes internes par traction contrôlée. En effet, les produits laminés à épaisseur variable obtenus doivent être découpés et/ou usinés pour réaliser des éléments de structure, notamment pour avion, et lors de ces étapes il est nécessaire que les contraintes internes soient minimales. Ainsi, une déformation permanente d'au moins 1 % dans la partie la plus épaisse est nécessaire. De plus, dans les alliages de la série 2XXX, cette déformation conditionne généralement l'obtention des propriétés mécaniques visées.

Lors de la traction contrôlée du produit d'épaisseur variable, la déformation permanente varie en fonction de la position dans la longueur. Cette variation a pu être considérée comme une difficulté en raison du problème de contrôle du produit obtenu. Cependant de manière surprenante cette variation est un avantage pour obtenir des produits ayant des propriétés optimales en tout point. Ainsi la déformation permanente est plus faible dans la partie épaisse que dans la partie mince. Typiquement la déformation permanente dans la partie la plus mince est d'au moins 3% quand la déformation permanente dans la partie la plus épaisse est d'au moins 1 %. Or une déformation permanente plus élevée conduit pour la plupart des alliages 2XXX à une résistance mécanique plus élevée alors que la ténacité est plus élevée lorsque la déformation est moindre, notamment pour les états T8. Cependant au-delà d'un certain seuil le gain de résistance mécanique obtenu grâce à la déformation permanente lors de la traction contrôlée devient faible et l'intérêt pour le compromis de propriétés est alors négligeable tandis que les difficultés pratiques de réalisation d'un taux de déformation élevé sont importantes. Avantageusement, la déformation permanente dans la partie la plus mince est donc au plus de 8 % et de préférence elle est au plus de 6%. Pour des éléments de structure aéronautiques tels que des intrados ou extrados de voilure, les propriétés souhaitées sont une résistance mécanique élevée et une ténacité suffisante à l'extrémité de l'aile et une ténacité élevée et une résistance mécanique suffisante vers l'emplanture de l'aile. De plus pour les panneaux de voilure l'épaisseur nécessaire est plus importante à l'emplanture qu'à l'extrémité de l'aile. Ainsi l'élément de structure a une forme plus proche du produit laminé issu du procédé selon l'invention que dans l'art antérieur dans lequel l'élément de structure est usiné à partir d'une tôle. Avantageusement, le volume de matière, c'est-à-dire d'alliage d'aluminium, à enlever par usinage entre le produit laminé issu du procédé selon l'invention et l'élément de structure est d'au moins 10 % inférieur et de préférence d'au moins 15% inférieur au volume de matière à enlever entre une tôle et le même élément de structure. De manière préférée, l'enveloppe convexe de l'élément de structure ne s'écarte pas de plus de 8 mm et avantageusement de plus de 5 mm du produit laminé issu du procédé selon l'invention. L'enveloppe convexe d'un objet est l'ensemble convexe le plus petit parmi ceux qui le contiennent, un ensemble convexe étant un objet géométrique qui, chaque fois qu'on y prend deux points A et B, le segment [A, B] qui les joint y est entièrement contenu. Le procédé selon l'invention conduit donc à des éléments de structure, notamment des panneaux de voilure, particulièrement bien adaptés aux besoins des constructeurs aéronautiques : l'épaisseur est plus élevée dans la zone ayant la ténacité la plus élevée qui est adaptée pour l'emplanture et l'épaisseur est plus faible dans la zone ayant la résistance mécanique la plus faible qui sera adaptée pour l'extrémité. Le rapport « buy to fly» et les propriétés du produit sont ainsi améliorés simultanément, cependant de manière préférée l'épaisseur des différentes partie est choisie en fonction des propriétés finales recherchées, compte tenu de l'évolution des propriétés finales avec le taux de déformation permanente lors de la traction, et non en fonction de la forme de l'élément de structure.

Avantageusement la déformation permanente lors de la traction contrôlée est comprise entre 1 et 3 % dans la partie la plus épaisse et entre 4 et 6% dans la partie la plus mince.

Après le détensionnement par traction contrôlé, le produit laminé d'épaisseur variable est vieilli naturellement pour obtenir un état T3 ou T3X ou artificiellement par revenu. De façon préférée, le revenu conduit à un état T8 ou T8X.

Les alliages de la série 2XXX AA2022, AA2023, AA2024, AA2024A, AA2124, AA2224, AA2324, AA2424 AA2524, AA2026, AA2027, sont particulièrement adaptés pour mettre en oeuvre le procédé selon l'invention à l'état T3 ou T3X.

Les alliages de la série 2XXX AA2618, AA2219, AA2519, AA2124, AA2139, AA2050, AA2055, AA2060, AA2076, AA2090, AA2091, AA2094, AA2095, AA2195, AA2295, AA2196, AA2296, AA2097, AA2197, AA2297, AA2397, AA2098, AA2198, AA2099 et AA2199 sont particulièrement adaptés pour mettre en oeuvre le procédé selon l'invention à l'état T8 ou T8X.
Le produit laminé d'épaisseur variable ainsi obtenu est avantageusement utilisé pour la fabrication d'éléments de structure monolithique pour avion. L'élément de structure ainsi obtenu présente des propriétés avantageuses dans la partie la plus épaisse et dans la partie la plus mince. L'utilisation d'un produit laminé d'épaisseur variable susceptible d'être obtenu par le procédé selon l'invention pour la fabrication d'une peau de voilure intrados ou extrados est particulièrement avantageuse.

Le produit laminé d'épaisseur variable obtenu par le procédé selon l'invention présente une partie la plus épaisse et une partie la plus mince dont l'épaisseur est différente d'au moins 10% et présente à mi-épaisseur les propriétés suivantes : une limite d'élasticité R_{p0,2}(L) en traction dans la partie la plus mince supérieure d'au moins 5% à celle dans la partie la plus épaisse et une ténacité K_{1C} L-T dans la partie la plus épaisse supérieure d'au moins 15% à celle dans la partie la plus mince. Avantageusement, quand la limite d'élasticité R_{p0,2}(L) en traction dans la partie la plus mince est supérieure d'au moins 5% à celle dans la partie la plus épaisse la ténacité K_{1C} L-T dans la partie la plus épaisse est supérieure d'au moins 40 % à celle dans la partie la plus mince et quand la ténacité K_{1C} L-T dans la partie la plus épaisse est supérieure d'au moins 15 % à celle dans la partie la plus mince, la limite d'élasticité R_{p0,2}(L) en traction dans la partie la plus mince est supérieure d'au moins 25% à celle dans la partie la plus épaisse. Une peau de voilure obtenue à partir d'un produit laminé selon ce mode de réalisation est particulièrement avantageuse.

Dans un mode de réalisation le produit laminé d'épaisseur variable est obtenu avec un alliage 2XXX contenant au moins 0,5 % en poids de lithium, avantageusement un alliage choisi parmi AA2050, AA2060, AA2076, AA2196 et AA2296, et présente à l'état T8 ou T8X une partie la plus épaisse et une partie la plus mince dont l'épaisseur est différente d'au moins 10% et dont la partie la plus épaisse a une épaisseur moyenne comprise entre 20 et 30 mm et a à mi-épaisseur les propriétés suivantes : R_{p0,2}(L) en traction > 340 MPa et préférentiellement R_{p0,2}(L) en traction > 360 MPa et K_{1C} L-T > 41 MPa m^{1/2} et de préférence 44 MPa m^{1/2} et dont la partie la plus mince a une épaisseur moyenne comprise entre 10 et 20 mm et a à mi-épaisseur les propriétés suivantes : R_{p0,2}(L) en traction > 440 MPa et préférentiellement R_{p0,2}(L) en traction > 480 MPa et K_{1C} L-T > 28 MPa m^{1/2} et de préférence 32 MPa m^{1/2} Une peau de voilure intrados obtenue à partir d'un produit laminé selon ce mode de réalisation est particulièrement avantageuse.

Dans un autre mode de réalisation le produit laminé d'épaisseur variable est obtenu avec un alliage 2XXX contenant au moins 0,5 % en poids de lithium, avantageusement un alliage choisi parmi AA2195, AA2295 et AA2055, et présente à l'état obtenu après T8 ou T8X une partie la plus épaisse et une partie la plus mince dont l'épaisseur est différente d'au moins 10% et dont la partie la plus épaisse a une épaisseur moyenne comprise entre 20 et 30 mm et a à mi-épaisseur les propriétés suivantes : R_{p0,2}(L) en traction > 580 MPa et préférentiellement R_{p0,2}(L) en traction > 590 MPa et K_{1C} L-T > 30 MPa m^{1/2} et de préférence 32 MPa m^{1/2} et dont la partie la plus mince a une épaisseur moyenne comprise entre 10 et 20 mm et a à mi-épaisseur les propriétés suivantes : R_{p0,2}(L) en traction > 600 MPa et préférentiellement R_{p0,2}(L) en traction > 625 MPa et K_{1C} L-T > 18 MPa m^{1/2} et de préférence 20MPa m^{1/2} Une peau de voilure extrados obtenue à partir d'un produit laminé selon ce mode de réalisation est particulièrement avantageuse.

### Exemple

Dans cet exemple, on réalise pour divers alliages un produit laminé de longueur 20 m dont l'épaisseur varie de façon continue entre une extrémité d'épaisseur 15,7 mm et l'autre extrémité d'épaisseur 22 mm.

Trois alliages sont considérés, les alliages AA2195, AA2050 et AA2196. L'alliage 2196 présente l'avantage d'avoir une densité de typiquement 2.64 contre 2.70 environ pour les deux autres alliages. L'alliage 2196 peut aussi avoir une résistance à la propagation des fissures de fatigue supérieure à celle de l'alliage 2050.

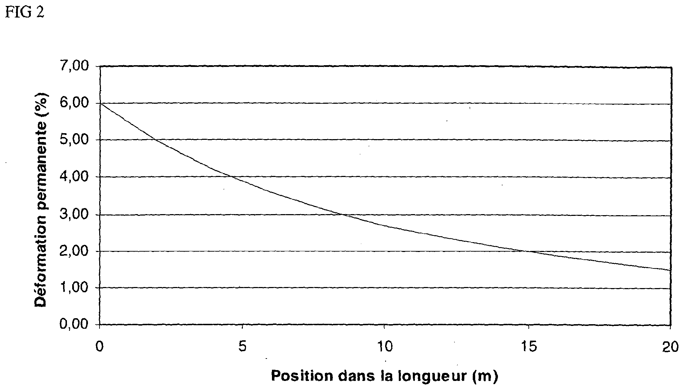

Des plaques en alliage AA2195, AA2050 et AA2196 sont coulées et homogénéisées. Les plaques sont laminées à chaud de façon à obtenir un produit laminé de longueur 20 m dont l'épaisseur varie de façon continue entre une extrémité d'épaisseur 15.7 mm et l'autre extrémité d'épaisseur 22 mm. Les produits laminés d'épaisseur variable ainsi obtenus sont mis en solution et trempés. Les produits laminés d'épaisseur variable ainsi mis en solution et trempés sont ensuite détensionnés par traction contrôlée. La déformation permanente obtenue est présentée en fonction de la position dans la longueur sur la figure 2, l'épaisseur étant de 15,7 mm pour la position « 0 m » et 22 mm pour la position « 20 m ». Les produits laminés ont enfin subi un revenu jusqu'à l'état T8.

Les propriétés mécaniques mesurées à mi-épaisseur obtenues à chaque extrémité sont présentées dans le tableau 1.

**Tableau 1 - Propriétés mécaniques obtenues à mi-épaisseur.**

| | Partie d'épaisseur 22 mm | | | Partie d'épaisseur 15,7 mm | | |
|---|---|---|---|---|---|---|
| Alliage | Rp_{0,2} L Traction (MPa) | Rp_{0,2} L Compression (MPa) | K_{1C} (MPa.m^{1/2}) L-T ( | Rp_{0,2} L Traction (MPa) | Rp_{0,2} L Compression (MPa) | K_{1C} (MPa.m^{1/2}) L-T |
| AA2195 | 590 | 600 | 33 | 635 | 620 | 22 |
| AA2050 | 380 | | 45 | 505 | | 38 |
| AA2196 | 350 | | 44 | 450 | | 30 |

Pour l'alliage AA2195, la limite d'élasticité R_{p0,2}L est supérieure de 8% dans la partie la plus mince à celle dans la partie la plus épaisse et la ténacité K_{1C}L-T est supérieure de 50% dans la partie la plus épaisse à celle dans la partie la plus mince. Pour l'alliage AA2050, la limite d'élasticité R_{p0,2}L est supérieure de 33% dans la partie la plus mince à celle dans la partie la plus épaisse et la ténacité K_{1C}L-T est supérieure de 18% dans la partie la plus épaisse à celle dans la partie la plus mince. Pour l'alliage AA2196, la limite d'élasticité R_{p0,2}L est supérieure de 29% dans la partie la plus mince à celle dans la partie la plus épaisse et la ténacité K_{1C}L-T est supérieure de 47% dans la partie la plus épaisse à celle dans la partie la plus mince. L'alliage AA2196 présente également l'avantage d'une densité plus faible que celle de l'alliage AA2050.

## Revendications

1. Procédé de fabrication d'un produit laminé d'épaisseur variable en alliage d'aluminium à traitement thermique dans lequel
a. on coule une plaque en alliage d'aluminium à traitement thermique,
b. optionnellement on homogénéise ladite plaque,
c. on lamine à chaud ladite plaque optionnellement homogénéisée, en réalisant dans le sens de la longueur une variation d'épaisseur pour obtenir un produit laminé d'épaisseur variable, présentant une partie la plus épaisse et une partie la plus mince dont la différence d'épaisseur est au moins 10%,
d. on met en solution et on trempe ledit produit laminé d'épaisseur variable,
e. on détensionne par traction contrôlée ledit produit laminé d'épaisseur variable ainsi mis en solution et trempé, avec une déformation permanente d'au moins 1 % dans la partie la plus épaisse,
f. on fait vieillir naturellement ou artificiellement le produit laminé ainsi obtenu.

2. Procédé selon la revendication 1 dans lequel l'épaisseur dudit produit laminé est comprise entre 10 et 50 mm et de préférence entre 12 et 30 mm.

3. Procédé selon la revendication 1 ou la revendication 2 dans lequel la déformation permanente lors de la traction contrôlée est comprise entre 1 et 3 % dans la partie la plus épaisse et entre 4 et 6% dans la partie la plus mince.

4. Procédé selon une quelconque des revendications 1 à 3 dans lequel ledit produit laminé présente à ses deux extrémités une épaisseur identique, ladite partie la plus épaisse ou ladite partie la plus mince étant localisée à mi-longueur.

5. Procédé de fabrication selon une quelconque des revendications 1 à 4 dans lequel ledit alliage est un alliage 2XXX.

6. Procédé selon la revendication 5 dans lequel ledit alliage contient au moins 0,5 % en poids de lithium et l'état métallurgique obtenu après vieillissement artificiel est un état T8 ou T8X.

7. Produit laminé d'épaisseur variable obtenu par le procédé selon une quelconque des revendications 1 à 6 présentant une partie la plus épaisse et une partie la plus mince dont l'épaisseur est différente d'au moins 10% et présentant à mi-épaisseur les propriétés suivantes : une limite d'élasticité R_{p0,2}(L) en traction dans la partie la plus mince supérieure d'au moins 5% à celle dans la partie la plus épaisse et une ténacité K_{1C} L-T dans la partie la plus épaisse supérieure d'au moins 15% à celle dans la partie la plus mince.

8. Produit laminé d'épaisseur variable selon la revendication 7 susceptible d'être obtenu par le procédé selon la revendication 6 présentant une partie la plus épaisse et une partie la plus mince dont l'épaisseur est différente d'au moins 10% et dont la partie la plus épaisse a une épaisseur moyenne comprise entre 20 et 30 mm et a à mi-épaisseur les propriétés suivantes : R_{p0,2}(L) en traction > 340 MPa et préférentiellement R_{p0,2}(L) en traction > 360 MPa et K_{1C} L-T > 41 MPa m^{1/2} et de préférence 44 MPa m^{1/2} et dont la partie la plus mince a une épaisseur moyenne comprise entre 10 et 20 mm et a à mi-épaisseur les propriétés suivantes : R_{p0,2}(L) en traction > 440 MPa et préférentiellement R_{p0,2}(L) en traction > 480 MPa et K_{1C} L-T > 28 MPa m^{1/2} et de préférence 32 MPa m^{1/2}.

9. Produit laminé selon la revendication 8 dans lequel ledit alliage d'aluminium à traitement thermique est choisi parmi AA2050, AA2060, AA2076, AA2196 et AA2296.

10. Peau de voilure intrados obtenue à partir d'un produit laminé selon la revendication 8 ou la revendication 9.

11. Produit laminé d'épaisseur variable selon la revendication 7 susceptible d'être obtenu par le procédé selon la revendication 6 présentant une partie la plus épaisse et une partie la plus mince dont l'épaisseur est différente d'au moins 10% et dont la partie la plus épaisse a une épaisseur moyenne comprise entre 20 et 30 mm et a à mi-épaisseur les propriétés suivantes : R_{p0,2}(L) en traction > 580 MPa et préférentiellement R_{p0,2}(L) en traction > 590 MPa et K_{1C} L-T > 30 MPa m^{1/2} et de préférence 32 MPa m^{1/2} et dont la partie la plus mince a une épaisseur moyenne comprise entre 10 et 20 mm et a à mi-épaisseur les propriétés suivantes : R_{p0,2}(L) en traction > 600 MPa et préférentiellement R_{p0,2}(L) en traction > 625 MPa et K_{1C} L-T > 18 MPa m^{1/2} et de préférence 20MPa m^{1/2}.

12. Produit laminé selon la revendication 11 dans lequel ledit alliage d'aluminium à traitement thermique est choisi parmi AA2195, AA2295 et AA2055.

13. Peau de voilure extrados obtenue à partir d'un produit laminé selon la revendication 11 ou la revendication 12.

14. Utilisation d'un produit laminé d'épaisseur variable obtenu par le procédé selon une quelconque des revendications 1 à 6 pour la fabrication d'un élément de structure monolithique pour avion et de préférence comme peau de voilure intrados ou extrados.

15. Utilisation selon la revendication 14 dans laquelle le volume de matière à enlever par usinage entre ledit produit laminé et ledit élément de structure est d'au moins 10 % inférieur et de préférence d'au moins 15% inférieur au volume de matière à enlever entre une tôle et le même élément de structure et/ou l'enveloppe convexe dudit élément de structure ne s'écarte pas de plus de 8 mm et avantageusement de plus de 5 mm dudit produit laminé.

## Patentansprüche

1. Verfahren zur Herstellung eines Walzerzeugnisses veränderlicher Dicke aus einer aushärtbaren Aluminiumlegierung, bei dem
a. ein Walzbarren aus einer aushärtbaren Aluminiumlegierung gegossen wird,
b. der Walzbarren wahlweise homogenisiert wird,
c. der wahlweise homogenisierte Walzbarren warmgewalzt und dabei in Längsrichtung eine Dickenveränderung ausgebildet wird, um ein Walzerzeugnis veränderlicher Dicke mit einem dicksten Abschnitt und einem dünnsten Abschnitt zu gewinnen, wobei der Dickenunterschied mindestens 10 % beträgt,
d. das Walzerzeugnis veränderlicher Dicke lösungsgeglüht und abgeschreckt wird,
e. das lösungsgeglühte und abgeschreckte Walzerzeugnis veränderlicher Dicke durch kontrolliertes Recken spannungsarm gereckt wird, mit einer bleibenden Verformung von mindestens 1 % im dicksten Abschnitt,
f. das so gewonnene Walzerzeugnis kalt oder warm ausgelagert wird.

2. Verfahren nach Anspruch 1, bei dem die Dicke des Walzerzeugnisses zwischen 10 und 50 mm und vorzugsweise zwischen 12 und 30 mm liegt.

3. Verfahren nach Anspruch 1 oder Anspruch 2, bei dem die bleibende Verformung beim kontrollierten Recken zwischen 1 und 3 % im dicksten Abschnitt und zwischen 4 und 6 % im dünnsten Abschnitt liegt.

4. Verfahren nach irgendeinem der Ansprüche 1 bis 3, bei dem das Walzerzeugnis an seinen beiden Enden eine gleiche Dicke aufweist, wobei der dickste Abschnitt bzw. der dünnste Abschnitt auf halber Länge angeordnet ist.

5. Herstellungsverfahren nach irgendeinem der Ansprüche 1 bis 4, bei dem die Legierung eine 2XXX-Legierung ist.

6. Verfahren nach Anspruch 5, bei dem die Legierung mindestens 0,5 Gew.-% Lithium enthält und der nach Warmauslagerung erhaltene Werkstoffzustand ein T8- oder ein T8X-Zustand ist.

7. Walzerzeugnis veränderlicher Dicke hergestellt durch das Verfahren nach irgendeinem der Ansprüche 1 bis 6, welches einen dicksten Abschnitt und einen dünnsten Abschnitt mit einem Dickenunterschied von mindestens 10 % aufweist und in halber Dicke folgende Eigenschaften besitzt: eine Streckgrenze R_{p0,2}(L) unter Zugbeanspruchung im dünnsten Abschnitt, welche um mindestens 5 % über der im dicksten Abschnitt liegt, und eine Bruchzähigkeit K_{IC} L-T im dicksten Abschnitt, welche um mindestens 15 % über der im dünnsten Abschnitt liegt.

8. Walzerzeugnis veränderlicher Dicke nach Anspruch 7 erhältlich durch das Verfahren nach Anspruch 6, welches einen dicksten Abschnitt und einen dünnsten Abschnitt mit einem Dickenunterschied von mindestens 10 % aufweist und dessen dickster Abschnitt eine durchschnittliche Dicke von 20 bis 30 mm hat und in halber Dicke folgende Eigenschaften besitzt: R_{p0,2}(L) unter Zugbeanspruchung > 340 MPa und vorzugsweise R_{p0,2}(L) unter Zugbeanspruchung > 360 MPa und K_{IC} L-T > 41 MPa m^{1/2} und vorzugsweise 44 MPa m^{1/2}, und dessen dünnster Abschnitt eine durchschnittliche Dicke von 10 bis 20 mm hat und in halber Dicke folgende Eigenschaften besitzt: R_{p0,2}(L) unter Zugbeanspruchung > 440 MPa und vorzugsweise R_{p0,2}(L) unter Zugbeanspruchung > 480 MPa und K_{IC} L-T > 28 MPa m^{1/2} und vorzugsweise 32 MPa m^{1/2}.

9. Walzerzeugnis nach Anspruch 8, bei dem die aushärtbare Aluminiumlegierung ausgewählt ist unter AA2050, AA2060, AA2076, AA2196 und AA2296.

10. Außenhaut für die Flügelunterseite, hergestellt aus einem Walzerzeugnis nach Anspruch 8 oder Anspruch 9.

11. Walzerzeugnis veränderlicher Dicke nach Anspruch 7 erhältlich durch das Verfahren nach Anspruch 6, welches einen dicksten Abschnitt und einen dünnsten Abschnitt mit einem Dickenunterschied von mindestens 10 % aufweist und dessen dickster Abschnitt eine durchschnittliche Dicke von 20 bis 30 mm hat und in halber Dicke folgende Eigenschaften besitzt: R_{p0,2}(L) unter Zugbeanspruchung > 580 MPa und vorzugsweise R_{p0,2}(L) unter Zugbeanspruchung > 590 MPa und K_{IC} L-T > 30 MPa m^{1/2} und vorzugsweise 32 MPa m^{1/2}, und dessen dünnster Abschnitt eine durchschnittliche Dicke von 10 bis 20 mm hat und in halber Dicke folgende Eigenschaften besitzt: R_{p0,2}(L) unter Zugbeanspruchung > 600 MPa und vorzugsweise R_{p0,2}(L) unter Zugbeanspruchung > 625 MPa und K_{IC} L-T > 18 MPa m^{1/2} und vorzugsweise 20 MPa m^{1/2}.

12. Walzerzeugnis nach Anspruch 11, bei dem die aushärtbare Aluminiumlegierung ausgewählt ist unter AA2195, AA2295 und AA2055.

13. Außenhaut für die Flügeloberseite, hergestellt aus einem Walzerzeugnis nach Anspruch 11 oder Anspruch 12.

14. Verwendung eines durch das Verfahren nach einem der Ansprüche 1 bis 6 gewonnenen Walzerzeugnisses veränderlicher Dicke für die Herstellung eines monolithischen Strukturelementes für Flugzeuge und vorzugsweise als Außenhaut für die Flügelunterseite bzw. Flügeloberseite.

15. Verwendung nach Anspruch 14, bei der die Menge von durch spanende Bearbeitung abzutragendem Material zwischen dem Walzerzeugnis und dem Strukturelement um mindestens 10 % und vorzugsweise um mindestens 15 % geringer ist als die Menge von abzutragendem Material zwischen einem Blech und demselben Strukturelement und/oder die konvexe Hülle des Strukturelementes nicht um mehr als 8 mm und vorzugsweise um mehr als 5 mm von dem Walzerzeugnis abweicht.

## Claims

1. Method for manufacturing a variable-thickness rolled product made from heat-treatable aluminium alloy in which
a. a slab of heat-treatable aluminium alloy is cast,
b. optionally said slab is homogenised,
c. said optionally homogenised slab is hot rolled, by achieving a lengthwise thickness variation to obtain a rolled product of variable thickness, having a thickest part and a thinnest part where the difference in thickness is at least 10%,
d. said variable-thickness rolled product is solution heat-treated and quenched,
e. said variable-thickness rolled product thus solution heat-treated and quenched is stress relieved by controlled stretching, with a permanent set of at least 1% in the thickest part,
f. the rolled product thus obtained is naturally or artificially aged.

2. Method according to claim 1, in which the thickness of said rolled product is between 10 and 50 mm and preferably between 12 and 30 mm.

3. Method according to claim 1 or claim 2, in which the permanent set during controlled stretching is between 1% and 3% in the thickest part and between 4% and 6% in the thinnest part.

4. Method according to any of claims 1 to 3, in which said rolled product has an identical thickness at both ends, said thickest part or said thinnest part being located at mid-length.

5. Manufacturing method according to any of claims 1 to 4, in which said alloy is a 2XXX alloy.

6. Method according to claim 5, in which said alloy contains at least 0.5% by weight lithium and the temper obtained after artificial aging is a T8 or T8X temper.

7. Variable-thickness rolled product obtained by the method according to any of claims 1 to 6, having a thickest part and a thinnest part where the thickness is different by at least 10% and having the following properties at mid-thickness: a tensile yield strength R_{p0.2}(L) in the thinnest part greater by at least 5% than that in the thickest part and a toughness K_{1C}L-T in the thickest part greater by a least 15% than that in the thinnest part.

8. Variable-thickness rolled product according to claim 7 able to be obtained by the method according to claim 6, having a thickest part and a thinnest part where the thickness is different by at least 10% and where the thickest part has an average thickness of between 20 and 30 mm and, at mid-thickness, the following properties: a tensile yield strength R_{p0.2}(L) > 340 MPa and preferentially R_{p0.2}(L) > 360 MPa and K_{1C}L-T > 41 MPa m^{1/2} and preferably 44 MPa m^{1/2} and where the thinnest part has an average thickness of between 10 and 20 mm and, at mid-thickness, the following properties: a tensile yield strength R_{p0.2}(L) > 440 MPa and preferentially R_{p0.2}(L) > 480 MPa and K_{1C}L-T > 28 MPa m^{1/2} and preferably 32 MPa m^{1/2}.

9. Rolled product according to claim 8, in which said heat-treatment aluminium alloy is chosen from AA2050, AA2060, AA2076, AA2196 and AA2296.

10. A lower wing skin obtained from a rolled product according to claim 8 or claim 9.

11. Variable-thickness rolled product according to claim 7 able to be obtained by the method according to claim 6, having a thickest part and a thinnest part where the thickness is different by at least 10% and where the thickest part has an average thickness of between 20 and 30 mm and, at mid-thickness, the following properties: a tensile yield strength R_{p0.2}(L) > 580 MPa and preferentially R_{p0.2}(L) > 590 MPa and K_{1C}L-T > 30 MPa m^{1/2} and preferably 32 MPa m^{1/2} and where the thinnest part has an average thickness of between 10 and 20 mm and, at mid-thickness, the following properties: a tensile yield strength R_{p0.2}(L) > 600 MPa and preferentially R_{p0.2}(L) > 625 MPa and K_{1C}L-T > 18 MPa m^{1/2} and preferably 20 MPa m^{1/2}.

12. Rolled product according to claim 11, in which the heat-treatment aluminium alloy is chosen from AA2195, AA2295 and AA2055.

13. An upper wing skin obtained from a rolled product according to claim 11 or claim 12.

14. Use of a variable-thickness rolled product obtained by the method according to any of claims 1 to 6 for manufacturing a monolithic structure element for an aeroplane and preferably as a lower or upper wing skin.

15. Use according to claim 14, in which the volume of material to be removed by machining between said rolled product and said structure element is at least 10% less and preferably at least 15% less than the volume of material to be removed between a plate and the same structure element, and/or the convex envelope of said structure element does not deviate by more than 8 mm and advantageously more than 5 mm from said rolled product.
